## Europäisches Patentamt
## European Patent Office
## Office européen des brevets

(19)

(11) Numéro de publication: **0 150 875**
**B1**

(12)

# FASCICULE DE BREVET EUROPÉEN

(45) Date de publication du fascicule du brevet:
**10.05.89**

(51) Int. Cl.⁴: **G 01 N 21/53**, D 06 F 39/00

(21) Numéro de dépôt: **85200044.7**

(22) Date de dépôt: **18.01.85**

(54) Procédé et appareillage pour déterminer l'instant d'arrêt d'un processus de renouvellement de liquide.

(30) Priorité: **23.01.84 FR 8400980**

(43) Date de publication de la demande:
**07.08.85 Bulletin 85/32**

(45) Mention de la délivrance du brevet:
**10.05.89 Bulletin 89/19**

(84) Etats contractants désignés:
**DE FR GB IT**

(56) Documents cité:
**DE-A-1 485 076**
**GB-A-1 401 426**
**GB-A-2 078 946**
**US-A-3 200 700**

(73) Titulaire: **Laboratoires d'Electronique et de Physique Appliquée L.E.P., 3, Avenue Descartes, F-94450 Limeil- Brévannes (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **DE GB IT**

(72) Inventeur: **Hazan, Jean- Pierre, Société Civile S.P.I.D. 209, rue de l'Université, F-75007 Paris (FR)**
Inventeur: **Steers, Michel, Société Civile S.P.I.D. 209, rue de l'Université, F-75007 Paris (FR)**

(74) Mandataire: **Landousy, Christian, Société Civile S.P.I.D. 209, Rue de l'Université, F-75007 Paris (FR)**

EP 0 150 875 B1

## Description

L'invention concerne un procédé pour la détermination automatique, par comparaison avec un liquide de référence, du processus de renouvellement d'un liquide renouvelé d'un appareil à liquide renouvelé, en fonction de la limpidité de ce liquide renouvelé, à l'aide d'un émetteur de lumière fournissant de la lumière qui, après avoir traversé le liquide de référence et le liquide renouvelé, est détectée par des détecteurs de lumière, qui, à l'aide de moyens électriques, permettent de déterminer la limpidité du liquide renouvelé et d'en contrôler son admission dans l'appareil à liquide renouvelé.

Elle concerne bien évidemment tout appareil assurant la mise en conformité d'un liquide renouvelé avec un liquide de référence tels que les machines à laver le linge ou autres, les appareils de contrôle de la norme d'un liquide par rapport à un liquide de référence.

Un processus conforme à l'invention sur lequel à titre d'exemple est plus particulièrement décrite l'invention, est illustré par les opérations de nettoiement, en particulier celles de rinçage de linge, dans une machine à laver le linge. Bien évidemment toute opération de nettoiement d'autres matériaux utilisant d'autres liquides selon ledit procédé est conforme à l'invention de même que l'utilisation d'un liquide de référence autre que l'eau de ville.

Lorsque le linge a été lavé à l'aide d'une solution aqueuse de détergent, éventuellement à température plus élevée que la température ambiante, de la salissure et des particules lourdes et légères de détergent, de débris de linge etc... se trouvent mélangées à l'eau de lavage. Celle-ci est évacuée, à l'issue de l'opération de lavage, puis renouvelée au cours de l'opération suivante de rinçage par une eau de ville afin d'éliminer les restes de débris, de saleté et de détergent qui n'ont pas été évacués à l'issue de l'opération de lavage. Cette opération de rinçage va s'effectuer soit suivant des cycles successifs d'admission et d'évacuation d'eau, soit avec admission et évacuation continues d'eau. Pour être complète l'opération de rinçage nécessite une quantité d'eau de ville suffisante qui dépend de la quantité de linge, de son degré de saleté, de la quantité de détergent utilisé. Bien évidemment, si on utilise un temps de rinçage constant, la quantité d'eau utilisée peut être soit trop faible, soit trop importante, selon les cas.

Une méthode habituelle pour déterminer si l'opération de rinçage est suffisante, et peut être arrêtée, est d'observer le degré de limpidité de l'eau de vidange.

Une telle méthode est décrite dans le brevet anglais n° 1 401 426 où les propriétés optiques de limpidité d'un liquide de rinçage propre sont mises à profit pour déterminer le moment optimal d'arrêt de l'opération de rinçage.

Cette méthode utilise une source de lumière émettant, séparément dans deux directions opposées, de la lumière traversant deux cellules de mesures possédant chacune leur propre détecteur de lumière, les cellules recevant, l'une l'eau de rinçage à contrôler et l'autre l'eau propre provenant de la canalisation d'arrivée d'eau de ville. Les deux détecteurs étant semblables, des moyens électriques permettent de comparer le flux lumineux de la cellule contenant l'eau de rinçage avec celui de la cellule contenant l'eau propre.

Mais cette méthode présente un désavantage. En effet, les deux cellules de mesures recevant l'une l'eau de rinçage et l'autre l'eau propre sont disjointes et reçoivent séparément les flux lumineux issus de la source de lumière. Comme l'eau de rinçage est un liquide dont l'état de saleté va évoluer d'un état de saleté important à un état de grande propreté recherché, il apparaît évident que des dépôts de saleté vont s'effectuer continûment au cours des utilisations successives de la machine à laver de telle sorte que les parois transparentes, à travers lesquelles passe le faisceau de lumière, vont peu à peu s'obscurcir. Les parois de la cellule contenant le liquide propre, dans cè cas de l'eau propre, ne vont pas subir le même phénomène ou très peu.

Les mesures optiques, qui peuvent alors être déterminées à partir de la mesure du flux lumineux traversant la cellule contenant le liquide de rinçage, vont peu à peu être représentatives plus de l'état de propreté des parois de la cellule que du liquide de rinçage lui-même; ou alors un processus délicat et onéreux à mettre en oeuvre, consistant à nettoyer très fréquemment les parois, est à adapter à la machine à laver.

Le but de l'invention est de s'affranchir au maximum de l'accroissement de l'état de saleté des parois contenant le liquide à analyser, et d'en éviter le nettoyage.

L'invention telle qu'indiquée dans le préambule caractérise ainsi un procédé dans lequel:

- on fait arriver un faisceau lumineux incident de telle sorte qu'il traverse d'abord une cellule contenant le liquide renouvelé avant d'atteindre une cellule contenant le liquide de référence;
- on détecte séparément, hors d'axe du faisceau lumineux incident, le flux de lumière déviée par les particules contenues par chacun des deux liquides;
- on compare les flux lumineux reçus simultanément au cours de ces détections;
- on arrête automatiquement le processus de renouvellement lorsque les flux reçus sont sensiblement égaux.

Ainsi la lumière en traversant d'abord le liquide renouvelé et les parois de la cellule le contenant, avant de traverser la cellule contenant le liquide de référence, va subir une diminution de flux lumineux dû à l'état de saleté des parois de la cellule à liquide renouvelé, qui se trouve ainsi pris en compte pour définir un état de limpidité du liquide renouvelé. En effet, le flux lumineux atteignant la cellule à liquide de référence n'est plus le flux lumineux issu directement de la source de lumière, mais se trouve diminué par son passage préalable dans la cellule contenant le liquide renouvelé. Le flux lumineux atteignant la cellule à liquide de référence va ainsi évoluer avec l'état de propreté des parois transparentes de la cellule contenant le liquide renouvelé, de telle sorte que cet état de propreté ne perturbera pas les mesures finales faites par les deux détecteurs de lumière, celles-ci traduisant réellement l'état de limpidité du liquide renouvelé comparé au liquide de référence. En effet le faisceau de lumière issu de la source de lumière va traverser un nombre égal de parois susceptibles d'être opacifiées avant d'atteindre les détecteurs de lumière.

Les deux détecteurs de lumière sont reliés à des moyens électriques qui permettent de comparer les flux lumineux reçus par les deux détecteurs de lumière. Selon un procédé mettant en oeuvre des opérations de rinçage dans un appareillage de nettoyage, par exemple une machine à laver le linge ou autres, on recherche une eau renouvelée ayant les caractéristiques les plus proches de l'eau de référence. La comparaison va ainsi consister à avoir, reçus par les deux cellules, des flux lumineux sensiblement égaux. Dans ce cas, le liquide de référence est constitué de l'eau propre et le liquide renouvelé est constitué de l'eau de rinçage.

Selon une autre variante le procédé s'applique à la mise en conformité d'une eau appelée sale avec une eau de référence appelée propre au cours d'un processus d'assainissement de l'eau.

L'invention sera mieux comprise à l'aide des figures suivantes qui représentent:

- figure 1: une représentation des variations de résistance d'une photorésistance en fonction du flux lumineux reçu lié à l'état de limpidité d'un liquide.
- figure 2: une vue schématique d'une machine à laver le linge comprenant un dispositif de mesure de la limpidité de l'eau de rinçage selon l'invention.
- figure 3: une vue en perspective du dispositif de mesure de la limpidité de l'eau.
- figure 4: une vue de côté du même dispositif.

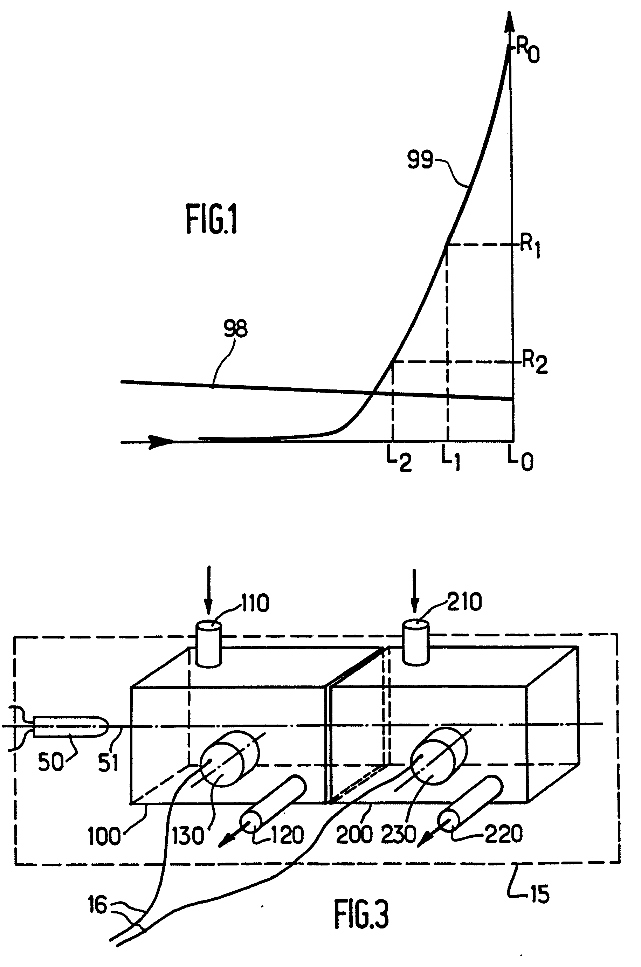

Sur la figure 1 sont représentées deux courbes 98, 99 concernant les variations de résistance d'une photorésistance en fonction de l'état de limpidité d'un liquide, respectivement dans les cas de la transmission (courbe 98) et de la diffusion (courbe 99). La valeur de la résistance de la photorésistance varie en sens inverse du flux lumineux reçu sur cette photorésistance. Pour des questions de commodité la courbe 98 est représentée à une échelle plus grande que celle utilisée pour la courbe 99.

L'état de limpidité $L_0$ correspond à une eau très limpide, c'est-à-dire à un flux lumineux maximal reçu en transmission par une photorésistance, et très faible lorsqu'il est détecté en diffusion. Lorsque la limpidité se détériore, on a par exemple le cas d'une eau de ville normale avec une limpidité $L_2$. La variation de résistance de la photorésistance recueillant le flux lumineux diffusé est beaucoup plus rapide que la variation de résistance recueillant le flux lumineux transmis. La méthode consistant à mesurer le flux lumineux diffusé est par suite beaucoup plus sensible.

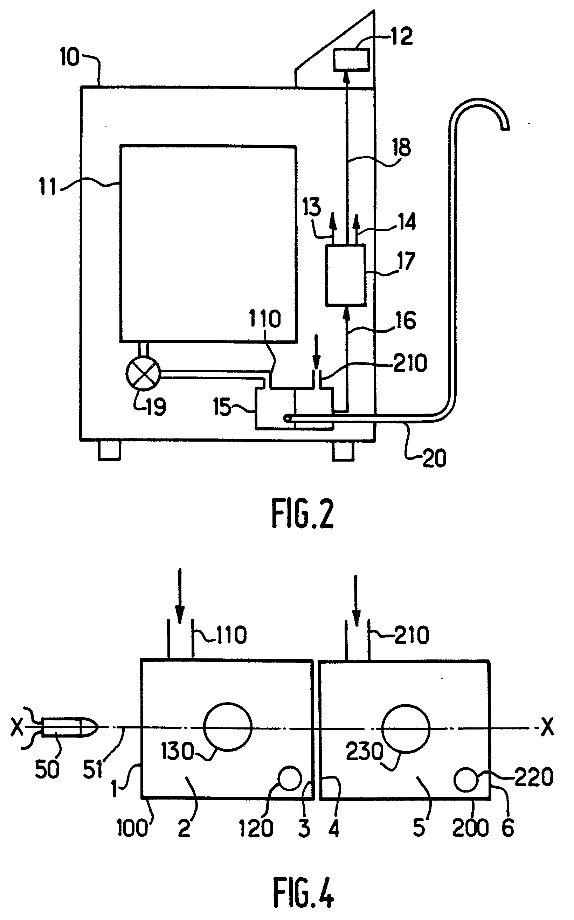

Sur la figure 2 ne sont représentés que les éléments essentiels permettant de comprendre comment le dispositif de mesure de la limpidité de l'eau s'insère dans une machine à laver le linge 10. A la partie inférieure de la cuve 11, après la pompe de vidange 19 dans la canalisation qui conduit à la crosse de vidange 20, on prélève, à l'aide d'un conduit d'admission 110, de l'eau en cours d'utilisation pour l'opération de rinçage que la machine effectue. Cette eau pénètre dans le dispositif de mesure de la limpidité 15 ainsi que de l'eau de référence, dans ce cas de l'eau de ville, qui elle pénètre par le conduit d'admission 210. Le dispositif de mesure de la limpidité de l'eau 15 délivre deux signaux électriques 16, qui entrent dans un dispositif de comparaison 17, lequel délivre un signal de comparaison 18 lorsque les signaux sont égaux, qui actionne le programmateur 12, et des signaux 13, 14 alertant l'utilisateur d'un défaut du dispositif. Le fonctionnement cyclique de la machine à laver le linge 10 se trouve donc contrôlé par le signal de comparaison 18.

La figure 3 représente une vue détaillée du dispositif de mesure de la limpidité de l'eau 15. Il est constitué d'un émetteur de lumière 50 délivrant un faisceau lumineux incident 51, d'une cellule à liquide renouvelé 100 ayant un conduit d'admission 110 et un conduit d'évacuation 120 du liquide renouvelé, dans ce cas l'eau de rinçage. Un détecteur de flux lumineux 130 placé sensiblement perpendiculairement à la direction de propagation du faisceau lumineux incident 51 reçoit la lumière qui est déviée par les particules contenues dans le liquide renouvelé. Après la cellule à liquide renouvelé 100, dans la direction de propagation du faisceau lumineux incident 51, le dispositif de mesure de limpidité 15 comprend également une cellule à liquide de référence 200, dans ce cas de l'eau de ville, ayant un conduit d'admission 210 et un conduit d'évacuation 220. Un détecteur de flux lumineux 230 semblable au précédent placé sensiblement perpendiculairement à la direction de propagation du faisceau lumineux incident 51 reçoit la lumière qui est déviée par les particules contenues dans le liquide de référence. Les détecteurs de flux lumineux 130, 230 délivrent des signaux électriques 16 qui sont utilisés par le dispositif de comparaison 17 (figure 2).

La figure 4 représente en plus des éléments déjà décrits:
- pour la cellule à liquide renouvelé 100 :

a) la face d'entrée 1 recevant le faisceau lumineux incident 51;
b) la face de détection 2 à travers laquelle passe un flux lumineux issu du faisceau lumineux incident 51 et qui a été dévié par les particules contenues dans le liquide renouvelé;

c) la face de sortie 3 à travers laquelle passe un flux lumineux issu du faisceau lumineux incident 51.

- pour la cellule à liquide de référence 200:

a) la face d'entrée 4 reçoit un flux lumineux qui a transité à travers la cellule à liquide renouvelé 100;

b) la face de détection 5 à travers laquelle passe un flux lumineux issu du faisceau lumineux qui a pénétré dans la cellule à liquide de référence 200, et qui a été dévié par les particules contenues dans le liquide de référence.

Les faces 1, 2, 3, 4, 5 doivent avoir une bonne transparence, sur toute ou partie de leur étendue, afin de permettre à la lumière issue du faisceau lumineux incident 51 d'atteindre les liquides renouvelé et de référence, puis les détecteurs de flux lumineux 130, 230.

Les faces 1, 2, 3 sont susceptibles d'être opacifiées d'une manière équivalente. Les mesures réalisées avec les détecteurs de flux lumineux 130, 230 prennent en compte respectivement les faces 1, 2 et les faces 1, 3. L'opacité des parois de la cellule 100 influencera de façon équivalente les deux mesures.

Les faces 1, 3, 4 sont disposées sensiblement perpendiculairement à la direction du faisceau lumineux incident 51 afin de transmettre le maximum de flux lumineux. Les faces 2, 5 sont sensiblement parallèles à la direction du faisceau lumineux incident 51. Mais un décalage d'axe, vis-à-vis de ces positions reste conforme à l'invention. Il suffit que le flux lumineux arrivant sur les détecteurs de flux lumineux 130, 230 soit suffisant pour être exploité. De même des faces 1, 2, 3, 4, 5 non planes améliorant la directivité des faisceaux lumineux est conforme à l'invention.

Les cellules à liquide renouvelé 100 et de référence 200 peuvent être constituées par la séparation par une plaque d'une cellule plus grande. Dans ce cas la face de sortie 3 de la cellule à liquide renouvelé 100 et la face d'entrée 4 de la cellule à liquide de référence 200 constituent les deux faces de cette plaque.

Egalement les cellules de mesure 100, 200 peuvent être constituées d'un modèle unique dont deux exemplaires sont mis côte à côte. Entre les faces 3 et 4 peut donc apparaître un espace qui est sans importance sur l'invention dans la mesure où il ne perturbe pas la propagation de la lumière entre les faces 3 et 4.

Les faces autres que les faces 1, 2, 3, 4, 5 ne doivent pas laisser passer de lumière, ce qui impose que si elles sont transparentes à de la lumière pouvant perturber les mesures, l'ensemble des cellules doit être gainé ou revêtu d'une protection ne permettant pas à un phénomène lumineux parasite de venir perturber les mesures. Seule la lumière issue de l'émetteur de lumière 50 peut être prise en compte pour le fonctionnement du dispositif.

De même, une collimation correcte doit être faite au niveau des détecteurs de flux lumineux pour que ceux-ci ne reçoivent pas la partie de flux lumineux directement transmise de l'émetteur de lumière 50 à la face de sortie 3 et qui serait réfléchie par celle-ci en direction du détecteur de flux lumineux 130. La même limitation existe en ce qui concerne la face de sortie 6 et le détecteur de flux lumineux 230.

Dans le cas d'une machine à laver, le dispositif est conçu pour compenser dans une très large plage l'obscurcissement lent et progressif des parois. Dans les cas extrèmes où un obscurcissement trop important apparaît, on procède à un remplacement de la cellule contenant le liquide renouvelé. L'aspect modulaire du dispositif permet de remplacer seulement la cellule contenant le liquide renouvelé.

Les moyens électriques sont conçus pour prendre en compte les situations limites qui apparaissent dans l'exploitation du procédé. Les détecteurs de flux lumineux 130, 230 seront conçus par exemple à l'aide de photorésistances les variations de résistance de chaque photorésistance avec le flux lumineux qu'elle reçoit, donc l'état de limpidité de l'eau, est représenté sur la figure 1.

Deux courbes sont représentées:

- une courbe 98 qui correspond à des mesures en transmission pour lesquelles les variations de résistance de la photorésistance indiquent une sensibilité assez faible en fonction de l'état de limpidité de l'eau;

- une courbe 99 qui correspond à des mesures de diffusion pour lesquelles les variations de résistance de la photorésistance indiquent une grande sensibilité en fonction de l'état de limpidité de l'eau.

C'est cette courbe 99 correspondant à des mesures en diffusion qui est principalement exploitée selon l'invention. Néanmoins, selon l'endroit où se situe la particule qui donne lieu à la diffusion de la lumière, et selon l'angle que fait l'axe du détecteur avec l'axe de propagation du faisceau lumineux incident 51, les mesures concernent tout à la fois des paramètres de diffusion et des paramètres de transmission. Mais les paramètres concernant la diffusion sont ceux que l'on cherche à favoriser dans l'exploitation du dispositif.

En l'absence de tout flux lumineux, la photorésistance va présenter une résistance d'obscurité $R_0$. Lorsque les parois 1 et 3 vont s'obscurcir au cours de l'utilisation du dispositif, de moins en moins de lumière va atteindre la cellule à liquide de référence. Il y a lieu de maintenir le flux lumineux l'atteignant à un niveau supérieur à un seuil au dessous duquel un remplacement de la cellule à liquide renouvelé s'impose. Ce seuil peut par exemple être fixé à une valeur $R_1$ de la photorésistance. Celle-ci variant en sens inverse du flux lumineux reçu doit donc rester inférieure à une valeur $R_1$. Cette valeur est par exemple $R_1 = R_0/2$. Elle peut être modifiée en fonction de l'application.

L'eau de ville peut présenter une qualité variable en fonction du lieu géographique de l'installation. Les eaux de ville peuvent en effet être ferrugineuses ou véhiculer des substances variées: débris de canalisation, dépôts ... qui nuisent à sa limpidité. Aussi lorsque la cellule à liquide renouvelé étant vide, on remplit la cellule à liquide de référence avec de l'eau de ville, la photorésistance du détecteur de flux lumineux 230 va présenter une valeur $R_{230} = R_2$ typique du lieu de l'installation de l'appareillage, correspondant à la qualité de l'eau disponible. Cette valeur est par exemple $R_2 = R_0/5$.

Le dispositif de comparaison 17 va ainsi, au début de chaque opération de la machine à laver, tester l'état de fonctionnement du dispositif de mesures de la limpidité de l'eau. Les valeurs de résistance $R_0$, $R_1$, $R_2$, $R_{230}$, $R_{130}$ sont traduites dans le dispositif de comparaison 17 respectivement en niveaux de tension $^VR_0$, $^VR_1$, $^VR_2$, $^VR_{230}$, $^VR_{130}$ qui sont comparés entre eux.

L'émetteur de lumière 50 étant mis en état de fonctionner, on effectue cette comparaison après avoir rempli la cellule à liquide de référence avec de l'eau de ville, et avoir laissé vide la cellule à liquide renouvelé. Le détecteur de flux lumineux 130 mesure donc la valeur de la résistance en état d'obscurité $R_0$. Les trois cas suivants peuvent se présenter:

- Lorsque le dispositif de comparaison 17 indique que $^VR_{230} = ^VR_{130} = ^VR_0$ on en déduit que l'émetteur de lumière 50 est défectueux et un signal de panne de l'émetteur de lumière 14 vient avertir l'utilisateur d'un défaut de fonctionnement.

- Lorsque le dispositif de comparaison 17 indique que le signal $^VR_{230}$ est compris entre les références $^VR_0$ et $^VR_1$, il s'agit alors d'un flux lumineux insuffisant caractéristique d'un état d'obscurcissement des parois. Le signal d'obscurcissement des parois 13 avertit alors l'utilisateur du défaut d'obscurcissement.

- Lorsque le dispositif de comparaison 17 indique que le signal $^VR_{230}$ est inférieur à $^VR_1$, alors le dispositif de mesure de la limpidité 15 est dans son état normal de fonctionnement et le processus de rinçage peut commencer. Tous ces signaux donnent lieu à un fonctionnement d'indicateurs visuels ou sonores avertissant l'utilisateur. Les normes affectées aux tensions $^VR_0$, $^VR_1$, $^VR_2$ sont évidemment pourvues de certaines tolérances déterminées par l'homme de l'art.

## Revendications

1. Procédé pour la détermination automatique, par comparaison avec un liquide de référence, du processus de renouvellement d'un liquide renouvelé d'un appareil à liquide renouvelé, en fonction de la limpidité de ce liquide renouvelé, à l'aide d'un émetteur de lumière fournissant de la lumière qui, après avoir traversé le liquide de référence et le liquide renouvelé, est détectée par des détecteurs de lumière, qui, à l'aide de moyens électriques, permettent de déterminer la limpidité du liquide renouvelé et d'en contrôler son admission dans l'appareil à liquide renouvelé, caractérisé en ce que:

- on fait arriver un faisceau lumineux incident de telle sorte qu'il traverse d'abord une cellule contenant le liquide renouvelé avant d'atteindre une cellule contenant le liquide de référence;
- on détecte séparément, hors d'axe du faisceau lumineux incident, le flux de lumière déviée par les particules contenues par chacun des deux liquides;
- on compare les flux lumineux reçus simultanément au cours de ces détections;
- on arrête automatiquement le processus de renouvellement lorsque les flux reçus sont sensiblement égaux.

2. Dispositif pour la mise en oeuvre du procédé selon la revendication 1, comprenant:

- deux cellules contiguës fermées étanches à leur propre contenu;
- un émetteur de lumière fournissant un faisceau lumineux indicent traversant successivement les deux cellules;
- deux détecteurs de flux lumineux situés hors du trajet direct du faisceau lumineux incident, et recevant chacun la lumière déviée exclusivement par les particules contenues dans les liquides de chaque cellule;
- des conduits d'admission et d'évacuation des deux liquides dans chacune des cellules, les parois des deux cellules étant transparentes, sur toute ou partie de leur étendue, pour permettre au faisceau lumineux issus de l'émetteur de lumière d'atteindre le liquide de référence, et pour que la lumière réémise puisse être détectée par les détecteurs de flux lumineux, lesdites cellules étant opaques à toute autre source de lumière parasite.

3. Dispositif selon la revendication 2, caractérisé en ce que les deux cellules contiguës sont séparées par une paroi unique.

4. Dispositif selon la revendication 2, caractérisé en ce que les deux cellules contiguës sont séparées par une paroi double, le milieu contenu dans cette paroi double étant sans influence sensible sur les propriétés optiques déterminées.

5. Dispositif selon la revendication 4, caractérisé en ce que les deux cellules contiguës constituent un montage modulaire de deux cellules identiques.

6. Dispositif selon une des revendications 2 à 5, caractérisé en ce que les détecteurs de flux lumineux sont disposés sensiblement perpendiculairement à l'axe du faisceau lumineux incident issu de l'émetteur de lumière.

7. Appareillage d'analyse à liquide renouvelé, dans lequel le liquide de référence est constitué par de l'eau propre et le liquide renouvelé est constitué par de l'eau en cours d'assainissement, caractérisé en ce qu'il utilise un dispositif selon l'une des revendications 2 à 6.

8. Machine à laver le linge ou autres dans laquelle le liquide de référence est constitué par de l'eau propre et le liquide renouvelé est constitué par de l'eau de rinçage, caractérisée en ce qu'elle utilise un dispositif selon l'une des revendications 2 à 6.

**Patentansprüche**

1. Verfahren zur automatischen Bestimmung des Erneuerungsverfahrens einer erneuerten Flüssigkeit eines Neuflüssigkeitsgerätes durch einen Vergleich mit einer Bezugsflüssigkeit, und zwar abhängig von der Durchsichtigkeit der erneuerten Flüssigkeit mit Hilfe eines Lichtstrahlers, der Licht liefert, das, nachdem es durch die Bezugsflüssigkeit und die erneuerte Flüssigkeit hindurchgegangen ist, von Lichtdetektoren detektiert wird, die mit Hilfe elektrischer Mittel die Bestimmung der Durchsichtigkeit der erneuerten Flüssigkeit, sowie die Regelung der Zufuhr derselben in dem Neuflüssigkeitsgerät ermöglichen, dadurch gekennzeichnet, dass:

- man einen Lichtstrahl derart auftreffen lässt, dass er zunächst durch eine Zelle mit erneuerten Flüssigkeit geht, bevor er eine Zelle mit der Bezugsflüssigkeit erreicht;
- man ausserhalb der Achse des eintreffenden Lichtstrahles einzeln den Strom des Lichtes detektiert, das durch die Teilchen in jeder der beiden Flüssigkeiten abgelenkt wird;
- man die bei diesen Detektionen gleichzeitig erhaltenen Lichtströme miteinander vergleicht;
- man das Erneuerungsverfahren automatisch anhält, wenn die erhaltenen Ströme nahezu gleich sind.

2. Vorrichtung zum Durchführen des Verfahrens nach Anspruch 1, wobei diese Vorrichtung die folgenden Elemente aufweist:

- zwei aneinander grenzende für den eigenen Inhalt dichte Zellen;
- einen Lichtstrahler, der einen Lichtstrahl liefert, der auftrifft und nacheinander durch die beiden Zellen geht;
- zwei Lichtstromdetektoren, die sich ausserhalb der eintreffenden direkten Lichtstrecke befinden und die je ausschliesslich das von den Teilchen in den Flüssigkeiten jeder Zelle abgelenkte Licht erhalten;
- Zu- und Abführungsrohre für die beiden Flüssigkeiten in jeder der Zellen, wobei die Wände der beiden Zellen transparent sind, insbesondere in dem flachen Teil, damit der von dem Lichtstrahler ausgestrahlte Lichtstrahl die Bezugsflüssigkeit erreicht und damit das zurückgeworfene Licht von den Lichtstromdetektoren detektiert werden kann, wobei die genannten Zellen für jede andere Lichtquelle lichtundurchlässig sind.

3. Vorrichtung nach Anspruch 2, dadurch gekennzeichnet, dass die beiden aneinander grenzenden Zellen durch eine einzige Wand voneinander getrennt sind.

4. Vorrichtung nach Anspruch 2, dadurch gekennzeichnet, dass die beiden aneinander grenzenden Zellen durch eine Doppelwand voneinander getrennt sind, wobei das Medium in dieser Doppelwand auf die zu bestimmenden optischen Eingangschaften keinen wesentlichen Einfluss hat.

5. Vorrichtung nach Anspruch 4, dadurch gekennzeichnet, dass die beiden aneinander grenzenden Zellen eine Modularanordnung zweier identischer Zellen bilden.

6. Vorrichtung nach einem der Ansprüche 2 bis 5, dadurch gekennzeichnet, dass die Lichtstromdetektoren im wesentlichen senkrecht auf der Achse des von dem Lichtstrahler gelieferten eintreffenden Lichtstrahles stehen.

7. Analysenapparatur für erneuerte Flüssigkeit, wobei in dieser Apparatur die Bezugsflüssigkeit durch Leitungswasser und die erneuerte Flüssigkeit durch das Abwasser gebildet wird, dadurch gekennzeichnet, dass in der Apparatur eine Vorrichtung nach einem der Ansprüche 2 bis 6 verwendet wird.

8. Waschmaschine für Wäsche oder andere Gegenstände, in der die Bezugsflüssigkeit durch Leitungswasser und die erneuerte Flüsigkeit durch das Spülwasser gebildet wird, dadurch gekennzeichnet, dass eine Vorrichtung nach einem der Ansprüche 2 bis 6 verwendet wird.

**Claims**

1. A method of automatically controlling a liquid-renewal process in a liquid-renewal apparatus depending on the clarity of a renewed liquid through comparison with the reference liquid by means of a light emitter which produces light which, after it has traversed the reference liquid and the renewed liquid, is detected by light detectors which enable the clarity of the renewed liquid to be determined by electrical means and thereby the supply of renewed liquid to the liquid-renewal apparatus to be controlled, characterized in that:

- a light beam is caused to be incident in such a way that it first traverses a cell containing the renewed liquid before it reaches a cell containing the reference liquid;
- the luminous flux deviated by the particles in each of the two liquids is detected separately, off the axis of the incident light beam;
- the luminous fluxes received simultaneously during said detection are compared;

- the liquid renewal-process is terminated automatically when the received fluxes are substantially equal to each other.

2. A device for carrying out the method as claimed in Claim 1, comprising:

- two adjoining cells which are sealed to be impermeable to their own contents;
- a light source producing an incident light beam which consecutively traverses the two cells;
- two light detectors which are situated outside the direct path of the incident light beam and which each receive only light which has been deviated by the particles contained in the liquids in each of the cells;
- supply and discharge conduits for the two liquids in each of the cells, the walls of the two cells being transparent over their entire or part of their surface areas to allow the light beams from the light source to reach the reference liquid and to allow the emergent light to be detected by light detectors, said cells being opaque to light from any other spurious light source.

3. A device as claimed in Claim 2, characterized in that the two adjoining cells are separated by a single wall.

4. A device as claimed in Claim 2, characterized in that the two adjoining cells are separated by a double wall, the medium between the double wall having no significant influence on the optical properties to be determined.

5. A device as claimed in Claim 4, characterized in that the two adjoining cells constitute a modular arrangement of two identical cells.

6. A device as claimed in any one of the Claims 2 to 5, characterized in that the light detectors are arranged substantially perpendicularly to the axis of the incident light beam which issues from the light source.

7. A liquid-renewal analysis apparatus, in which the reference liquid is pure water and the renewed liquid is water being purified, characterized in that it employs a device as claimed in any one of the Claims 2 to 6.

8. A laundry or other washing machine, in which the reference liquid is pure water and the renewed liquid is rinsing water, characterized in that it utilizes a device as claimed in any one of the Claims 2 to 6.

FIG.1

FIG.3

FIG.2

FIG.4

3